# EUROPÄISCHE PATENTSCHRIFT

(11) **EP 0 621 349 B1**
(45) Veröffentlichungstag und Bekanntmachung des Hinweises auf die Patenterteilung: **27.03.1996**
(21) Anmeldenummer: 93120771.6
(22) Anmeldetag: 23.12.1993
(51) Int. Cl.: C23C 8/68, C23C 8/42, C23C 8/06

(54) **Oberflächengehärtete Gegenstände aus Platin- und Palladiumlegierungen und Verfahren zu deren Herstellung**
Surface hardened platinum and palladium alloy articles and process for producing the same
Articles d'alliages de platine et de palladium superficiellement durcis et procédé de leur fabrication

(30) Priorität: 23.04.1993 DE 4313272
(43) Veröffentlichungstag der Anmeldung: 26.10.1994
(73) Patentinhaber: Degussa Aktiengesellschaft, D-60311 Frankfurt (DE)
(72) Erfinder: Weber, Wolfgang, D-63791 Karlstein/M. (DE); Beyer, Hans-Hermann, Dr., D-63796 Kahl/M. (DE); Zimmermann, Klaus, Dr., D-63755 Alzenau (DE)

(56) Entgegenhaltungen:
- PATENT ABSTRACTS OF JAPAN vol. 15, no. 445 (C-0884) 13. November 1991 & JP-A-03 188 231 (SEIKO INSTR INC) 16. August 1991
- CHEMICAL ABSTRACTS, vol. 97, no. 10, 6. September 1982, Columbus, Ohio, US; abstract no. 77268d, SUWA SEIKOSHA 'boronizing of metals' Seite 312 ;Spalte 97 ;
- CHEMICAL ABSTRACTS, vol. 90, no. 18, 30. April 1979, Columbus, Ohio, US; abstract no. 140892a, MATSUMOTO HIROO 'metal boronizing agents' Seite 191 ;Spalte 90 ;
- PATENT ABSTRACTS OF JAPAN vol. 8, no. 266 (C-255) 6. Dezember 1984 & JP-A-59 143 032 (MITSUBISHI KINZOKU) 16. August 1984
- DATABASE WPI Derwent Publications Ltd., London, GB; AN 91-284865 'surface hardened colour palladium alloy' & JP-A-3 188 232 (SEIKO INSTRUMENTS) 16. August 1991
- DATABASE WPI 14. März 1990 Derwent Publications Ltd., London, GB; AN 90-035943/05 'soln. for low temp. boronising' & SU-A-271 033 (TRACTOR COMB MOTORS) 30. April 1989
- PATENT ABSTRACTS OF JAPAN vol. 15, no. 445 (C-0884) 13. November 1991 & JP-A-03
- PATENT ABSTRACTS OF JAPAN, Band 15, Nr. 445 (C-884), 13 November 1991
- CHEMICAL ABSTRACTS, Band 97, Nr. 10, 06 September 1982, Columbus, OH (US); SUWA SEIKOSHA, Seite 312, Nr. 77268d
- CHEMICAL ABSTRACTS, Band 90, Nr. 18, 30 April 1979, Columbus, OH (US); MATSUMOTO HIROO, Seite 191, Nr. 140892a
- PATENT ABSTRACTS OF JAPAN, Band 8, Nr. 266, (C-255), 06 Dezember 1984
- DATABASE WPI, Derwent Publications Ltd., London (GB); AN 91-284865
- DATABASE WPI, 14 März 1990, Derwent Publications Ltd., London (GB); AN 90-035943/05

## Beschreibung

Die Erfindung betrifft Gegenstände aus Platin und Palladium, die mit einer harten und kratzfesten Oberflächenschicht versehen sind, die Bor enthält, wobei das Platin bis zu 25 Gew.% Edel- und Unedelmetalle und das Palladium bis zu 65 Gew.% anderer Edelmetalle und bis zu 15 Gew.% Unedelmetalle enthalten können. Außerdem betrifft sie ein Verfahren zur Herstellung solcher Gegenstände.

Gegenstände aus Platin und Platinlegierungen spielen besonders im Schmuckbereich eine immer größere Rolle. Auch Palladiumlegierungen werden im wachsenden Umfang für technische Zwecke eingesetzt. Reines Platin und reines Palladium sind sehr weich und lassen sich auch durch Zulegieren von anderen Edel- und Unedelmetallen nicht auf sehr hohe Härtewerte bringen, ohne Einbußen sonstiger charakteristischer Eigenschaftswerte in Kauf nehmen zu müssen. Dies führt beispielsweise bei Ringen oder Uhrgehäusen zu einem leichten Verkratzen der Oberfläche.

Durch Zulegieren von beispielweise Eisen, Kobalt, Bor oder Silizium auf schmelzmetallurgischem Weg lassen sich Hartewerte bis zu etwa 300 kp/mm errreichen, wobei sich intermetallische Phasen ausbilden, die für die Härte maßgeblich sind.

Aus der EP-OS 0 274 239 sind kratzfeste Platingegenstände bekannt, bei denen man Elemente, wie Aluminium, Chrom, Titan oder Zirkonium in die Oberfläche eindiffundieren lässt, die in der Oberflächenschicht intermetallische Verbindungen, wie PtAl₄, Pt₃Al oder Pt₂Al₃ ausbilden. Genannt wird unter anderem Bor, jedoch werden keine Beispiele oder Verfahrensparameter angegeben. Die Ausbildung von intermetallischen Verbindungen bringt zwar eine Härtesteigerung in der Oberflächenschicht, hat aber den Nachteil, daß man ein heterogenes mehrphasiges Gefüge erhält mit ungleichmäßigen Eigenschaften. Außerdem sind relativ hohe Konzentrationen des eindiffundierenden Metalls in der Oberflächenschicht notwendig, um die gewünschten Härteeffekte zu erzielen. Dadurch sind solche Gegenstände auf dem Schmucksektor nicht punzierfähig.

Das Borieren von Platin- und Palladiumlegierungsgegenständen zum Härten der Oberfläche ist schon bekannt (vgl. z.B. JP-A-59 143032, JP-A- 3 188 231 und JP-A-3 188 232).

Es war daher Aufgabe der vorliegenden Erfindung, Gegenstände aus Platin und Palladium zu entwickeln, die mit einer harten und kratzfesten Oberflächenschicht versehen sind, die Bor enthält, wobei das Platin bis zu 25 Gew.% Edel- und Unedelmetalle und das Palladium bis zu 65 Gew.% anderer Edelmetalle und bis zu 15 Gew.% Unedelmetalle enthalten können. Dabei sollen keine großen Mengen an Bor eindiffundieren, damit die Gegenstände punzierfähig bleiben. Außerdem sollte in der Oberflächenschicht ein homogenes Gefüge erhalten bleiben. Weiterhin war ein Verfahren zur Herstellung solcher Gegenstände zu entwickeln.

Diese Aufgabe wird erfindungsgemäß dadurch gelöst, daß die gehärtete Oberflächenschicht 20 bis 500 µm stark ist und 0,3 bis 1,5 Gew.% Bor enthält, das weitestgehend in das Metallgitter eingelagert ist.

Vorzugsweise ist die gehärtete Oberflächenschicht 30 bis 250 µm stark und enthält 0,5 bis 0,9 Gew.% Bor.

Entscheidend für den Härtungseffekt ist, daß sich keine intermetallischen Verbindungen zwischen dem Bor und den Platinmetallen bzw. den anderen Legierungsmetallen in der Oberflächenschicht ausbilden, sondern daß die Boratome in das Metallgitter eingebaut werden, wobei sich vorzugsweise Einlagerungsmischkristalle ausbilden. Obwohl keine intermetallischen Verbindungen entstehen, erhält man eine außerordentlich hohe Härtelegierung in dieser Oberflächenschicht.

Die Herstellung dieser borhaltigen, gehärteten Platin- und Palladiumschichten erfolgt durch Behandlung der Gegenstände mit borabgebenden Verbindungen bei höheren Temperaturen, wobei vorzugsweise die Gegenstände in einem Gemisch aus einem Boriermittel, einem Aktivator und gegebenenfalls einer Inertsubstanz bei Temperaturen von 500^{o} C bis zum Schmelzpunkt des entsprechenden Platin- Bor- bzw. Palladium-Bor-Eutektikums erhitzt werden,

bis eine Oberflächenschicht von 20 bis 500 µm einen Borgehalt von 0,3 bis 1,5 Gew.% aufweist.

Vorteilhafterweise besteht das Gemisch aus 70 bis 95 Gew.% amorphem Bor und/oder Borcarbid als Boriermittel und 5 bis 30 Gew.% Kaliumborfluorid als Aktivator, wobei diesem Gemisch bis zu 50 Gew.% einer Inertsubstanz zugegeben werden kann. Als Inertsubstanz kann beispielsweise Aluminiumoxid dienen.

Dieses Boriergemisch kann als Pulver oder auch als Paste eingesetzt werden. Es ist jedoch auch möglich, gasförmige Boriermittel oder borabgebende Salzschmelzen zu verwenden.

Die Borierung von Platin bzw. Platinlegierungen zur Oberflächenhärtung muß unterhalb des Pt-B-Eutektikums bei 790° C, vorzugsweise bei 750° C mit hohem Borangebot erfolgen. Eine Borierung mit hohem Borangebot bei Temperaturen oberhalb 790° C führt zu Anschmelzungen und zur 8ildung von Platin-Bor-Phasen. Die Eindiffusion von Bor bei Temperaturen unterhalb 790° C bewirkt im Platin eine Erhöhung der Eigenspannung und somit eine Festigkeits- und Härtesteigerung. Die gehärtete Oberflächenschicht enthält nur sehr wenig Bor in fester Lösung (<1,5 %). Die erzielte Härte ist von der Menge des eindiffundierten Bors und dessen Verteilung im Metallgitter abhängig. Diese Verteilung lässt sich über die Arbeitstemperatur steuern. Das Borangebot in dem Boriergemisch ist über den Anteil der Inertsubstanz beeinflussbar.

Die Zeitdauer der Borierung bis zum Erreichen des gewünschten Borgehaltes in der gewünschten Schichtstärke lässt sich durch einfache Versuche leicht bestimmen.

Am besten eignet sich zur Borierung von Platin oder Platinlegierungen bzw. Palladium- oder Palladiumlegierungen ein Gemisch aus amorphem Bor als Borspender, Aluminiumoxid als Inertsubstanz und Kaliumborfluorid (KBF₄) als Aktivator. Die Gegenstände können beispielsweise in Glühkästen mit Deckel aus Stahl in diese Pulvermischung eingepackt und für 1 bis 5 Stunden in einem Ofen erhitzt werden. Das Gemisch kann auch in ein Bindersystem, bestehend aus Binder und Lösungsmittel eingearbeitet werden, in welches man die Teile eintaucht. Die anhaftende Suspension wird zunächst getrocknet. Anschließend werden die beschichteten Teile im Ofen geglüht. Wird an Luft geglüht, müssen die Teile sehr sorgfältig eingepackt (1 cm Pulverschüttung über den Teilen) oder beschichtet (2-3 mm getrocknete Suspension) werden, ansonsten sollte die Glühung unter Schutzgas, Argon oder Wasserstoff (kein N₂ wegen Bornitridbildung) erfolgen. Die Glühtemperatur richtet sich danach ob mit Reinplatin oder Platinlegierungen gearbeitet wird. Reinplatin und Platin/Cobalt-Legierungen werden bei Temperaturen unter 800^{o} C, vorzugsweise bei 750^{o} C geglüht. Platin/Wolfram- und Platin/Kupfer-Legierungen werden bei Temperaturen unter 900^{o} C, vorzugsweise bei 800^{o} C geglüht. Nach der Abkühlung des Ofens werden die Teile aus dem Glühkasten entnommen und mit einem Pinsel von anhaftendem Pulver gereinigt. Das lockere Pulver kann nach Zusatz von KBF₄ (ca. 10 % Gew.) erneut verwendet werden. Teile die mit einer Suspension beschichtet wurden, haben nach dem Glühprozeß eine harte anhaftende Schicht aus zusammengesintertem Pulver, die vorsichtig entfernt werden muß.

Anstelle von amorphem Bor kann man auch feinkörniges (<40 µm) Borkarbid und Bornitrid einsetzen, wobei letzteres ein Zusammenbacken des Pulvergemisches erschwert.

Beim Härten von Palladium und Palladiumlegierungen arbeitet man vorzugsweise bei Temperaturen von 850 bis 900^{o}.

Folgende Beispiele sollen die Erfindung näher erläutern:
1. In einen Glühkasten aus Edelstahl (5x5x5cm) wird 15g einer Mischung aus 85g Bor₍ₐₘₒᵣₚₕ₎ und 15g KBF₄ gegeben. Anschließend wird eine Kette der Platinlegierung Pt850/Co150 in das lockere Borierpulver gelegt. Die Kette wird anschließend mit weiteren 15g Borierpulver abgedeckt und die Pulvermischung festgestampft. Danach wird der Glühkasten mit einem Deckel mit überstehendem Rand geschlossen und in einen Ofen gestellt. Die Glühbehandlung erfolgt für 5 Stunden bei einer Temperatur von 750^{o} C. Danach haben die Kettenglieder eine borierte Diffusionszone von ca. 250 µm Dicke mit einer Härte von ca. 730 kg/mm, bei einem Borgehalt von ca. 0,8 Gew.% .
2. In einen Glühkasten aus Edelstahl (5x5x5cm) wird 10 g einer Mischung aus 90 g Bor₍ₐₘₒᵣₚₕ₎ und 10 g KBF₄ gegeben. Anschließend wird ein Uhrgehäuse der Platinlegierung Pt 950/W50 in das lockere Borierpulver gelegt. Das Uhrgehäuse wird anschließend mit weiteren 10 g Borierpulver abgedeckt und die Pulvermischung festgestampft. Danach wird der Glühkasten mit einem Deckel mit überstehendem Rand geschlossen und in einen Ofen gestellt. Die Glühehandlung erfolgt für 3 Stunden bei einer Temperatur von 780^{o} C. Danach hat das Uhrgehäuse eine borierte Diffusionszone von ca. 150 µm Dicke mit einer Härte von ca. 680 kp/mm, bei einem Borgehalt von etwa 0,85 Gew.% m der Diffusionszone.
3. In einen Glühkasten aus Edelstahl (5x5x5cm) wird 5g einer Mischung aus 80 g Bor₍ₐₘₒᵣₚₕ₎ und 20 g KBF₄ gegeben. Anschließend wird ein Ring der Platinlegierung Pt 960/Cu40 in das lockere Borierpulver gelegt. Der Ring wird anschließend mit weiteren 5 g Borierpulver abgedeckt und die Pulvermischung festgestampft. Danach wird der Glühkasten mit einem Deckel mit überstehendem Rand geschlossen und in einen Ofen gestellt. Die Glühbehandlung erfolgt für 5 Stunden bei einer Temperatur von 760^{o} C. Danach hat der Ring eine borierte Diffusionszone von ca. 150 µm Dicke mit einer Härte von ca. 700 kp/mm, bei einem Borgehalt von etwa 0,9 Gew.% .
4. In eine Suspension aus 270 g Bor₍ₐₘₒᵣₚₕ₎, 30 g KBF₄, 15 Poyisobutylen und 200 g Leichtbenzin wird ein Ring (ca. 5 g) aus der Legierung Pt 900/Ni100 eingetaucht. Nach dem Herausziehen wird die anhaftende Suspension (ca. 5 g) bei 80^{o} C getrocknet. Die Glühbehandlung erfolgt bei 750^{o} C für 3 Stunden. Nach dem Abkühlen wird die fest angebackene Schicht sorgfältig entfernt. Der Ring hat eine Bordiffusionsschicht von ca. 100 µm Dicke, mit einer Härte von ca. 710 kp/mm, bei einem Borgehalt von ca. 1,0 Gew.% .
5. In eine Suspension aus 150 g Aluminiumoxid, 135 g Bor₍ₐₘₒᵣₚₕ₎, 15 g KBF₄, 15 Poyisobutylen und 200 g Leichtbenzin wird ein Ring (ca. 5 g) aus der Legierung Pt 950/Co50 eingetaucht. Nach dem Herausziehen wird die anhaftende Suspension (ca.5g) bei 80^{o} C getrocknet. Die Glühbehandlung erfolgt bei 750^{o} C für 5 Stunden. Nach dem Abkühlen wird die fest angebackene Schicht sorgfältig entfernt. Der Ring hat eine Bordiffusionsschicht von ca.180µm Dicke, mit einer Härte von ca. 480 kp/mm, bei einem Borgehalt von 0,6 Gew.% .
6. In einen Glühkasten aus Edelstahl (5x5x5cm) wird 5g einer Mischung aus 100 g Al₂0₃, 90 Bor₍ₐₘₒᵣₚₕ₎ und 10 g KBF₄ gegeben. Anschließend wird ein Platinring Pt 999 in das lockere Borierpulver gelegt. Der Ring wird anschließend mit weiteren 5 g Borierpulver abgedeckt und die Pulvermischung festgestampft. Danach wird der Glühkasten mit einem Deckel mit überstehendem Rand geschlossen und in einen Ofen gestellt.
   Die Glühbehandlung erfolgt für 5 Stunden bei einer Temperatur von 750^{o} C. Danach hat der Ring eine borierte Diffusionschicht von ca. 250 µm Dicke mit einer Härte von ca. 500 kp/mm (Borgehalt ca. 0,65 Gew.% ).
7. In einen Glühkasten aus Edelstahl (5x5x5cm) wird 10 g einer Mischung aus 50 g B₄C, 30 g BN und 20 g KBF₄ gegeben. Anschließend wird ein Uhrgehäuse der Platinlegierung Pt 950/W50 in das lockere Borierpulver gelegt. Das Uhrgehäuse wird anschließend mit weiteren 10 g Borierpulver abgedeckt und die Pulvermischung festgestampft. Danach wird der Glühkasten mit einem Deckel mit überstehendem Rand geschlossen und in einen Ofen gestellt. Die Glühbehandlung erfolgt für 3 Stunden bei einer Temperatur von 780^{o} C. Danach hat das Uhrgehäuse eine borierte Diffusionszone von ca. 150 µm Dicke mit einer Härte von ca. 450 kp/mm, bei einem Borgehalt von ca. 0,5 Gew.%.
8. In einen Glühkasten aus Edelstahl (5x5x5cm) wird 10 g einer Mischung aus 20 g Bor₍ₐₘₒᵣₚₕ₎, 40 g B₄C, 30 g BN und 10 g KBF₄ gegeben. Anschließend wird ein Uhrgehäuse der Platinlegierung Pt 900/Pd100 in das lockere Borierpulver gelegt. Das Uhrgehäuse wird anschließend mit weiteren 10 g Borierpulver abgedeckt und die Pulvermischung festgestampft. Danach wird der Glühkasten mit einem Deckel mit überstehendem Rand geschlossen und in einen Ofen gestellt. Die Glühbehandlung erfolgt für 3 Stunden bei einer Temperatur von 750^{o} C. Danach hat das Uhrgehäuse eine borierte Diffusionszone von ca. 150 µm Dicke mit einer Härte von ca. 550 kp/mm (Borgehalt ca. 0,7 Gew.% ).
9. Ein Gegenstand aus reinem Palladium wird wie in den vorhergehenden Beispielen in ein Gemisch aus 90 g amorphem Bor und 10 g Kaliumborfluorid eingebettet und 5 Stunden bei 800^{o} C erhitzt. Man erhält eine gehärtete Schicht von 150 µm mit einer Härte von 560 kp/cm (Borgehalt ca. 0,65 Gew.% ).
10.Gegenstände aus einer Palladiumlegierung mit 80 Gew.% Palladium, 6 Gew.% Kupfer, 7 Gew.% Zinn und 7 Gew.% Gallium wird in eine Gemisch aus 50 g amorphem Bor, 10 g Kaliumborfluorid, 20 g Borcarbid und 20 g Bornitrid eingepackt und 4 Stunden bei 830^{o} C erhitzt. Man erhält eine gehärtete Schicht von 100 µm mit einem Härtewert von 450 kp/cm (Borgehalt etwa 0,45 Gew.% ).
11.Gegenstände aus einer Palladiumlegierung mit 54 Gew.% Silberantteil wird in eine Mischung von 90 g amorphem Bor und 10 g Kaliumborfluorid eingepackt und 3 Stunden bei 800^{o} C erhitzt. Schichtdicke ca. 60 µm mit einer Härte von 380 kp/cm (Borgehalt etwa 0,4 Gew.% ).
12.Gegenstände aus einer Legierung von 40 Gew.% Palladium, 44 Gew.% Silber, 11 Gew.% Germanium und 5 Gew.% Indium wird in einer Mischung aus 70 g amorphem Bor und je 10 g Borcarbid, Bornitrid und Kaliumborfluorid 5 Stunden bei 800^{o} C erhitzt. Man erhält eine gehärtete Schicht von ca. 100 µm mit einer Härte von 400 kp/cm (Borgehalt ca. 0,4 Gew.% ).

## Patentansprüche

1. Gegenstände aus Platin und Palladium, die mit einer harten und kratzfesten Oberflächenschicht versehen sind, die Bor enthält, wobei das Platin bis zu 25 Gew.Z Edel- und Unedelmetalle und das Palladium bis zu 65 Gew.% anderer Edelmetalle und bis zu 15 Gew.% Unedelmetalle enthalten können, wobei die gehärtete Oberflächenschicht 20 bis 500 µm stark ist und 0,3 bis 1,5 Gew.Z Bor enthält, das weitestgehend in das Metallgitter eingelagert ist.

2. Gegenstände nach Anspruch 1, wobei die gehärtete Oberflächenschicht 30 bis 250 µm stark ist und 0,5 bis 0,9 Gew.% Bor enthält.

3. Verfahren zum Härten von Gegenständen aus Platin und Palladium gemäß Anspruch 1 oder 2, durch Behandeln mit borabgebenden Substanzen bei höheren Temperaturen,
**dadurch gekennzeichnet**,
daß die Gegenstände in einem Gemisch aus einem Boriermittel, einem Aktivator und gegebenenfalls einer Inertsubstanz bei Temperaturen von 500^{o} C bis zum Schmelzpunkt des entsprechenden Platin- Bor-bzw. Palladium- Bor- Entektikums erhitzt werden, bis eine Oberflächenschicht von 20 bis 500 µm einen Borgehalt von 0,3 bis 1,5 Gew.% aufweist.

4. Verfahren zum Härten von Gegenständen nach Anspruch 3,
**dadurch gekennzeichnet**,
daß das Gemisch 70 bis 95 Gew.% amorphes Bor und/oder Borcarbid als Boriermittel und 5 bis 30 Gew.% Kaliumborfluorid als Aktivator enthält.

## Claims

1. Objects made of platinum and palladium, which are provided with a hard and scratch-resistant surface layer, which layer contains boron, wherein the platinum may contain up to 25 wt.% of precious metals and base metals and the palladium may contain up to 65 wt.% of other precious metals and up to 15 wt.% of base metals, with the hardened surface layer being from 20 to 500 µm thick and containing from 0.3 up to 1.5 wt.% of boron, which is to a very large extent included in the metal lattice.

2. Objects according to claim 1, wherein the hardened surface layer is from 30 to 250 µm thick and contains from 0.5 to 0.9 wt.% of boron.

3. Process for the hardening of objects made of platinum and palladium according to claim 1 or 2, by treatment with boron-donating substances at elevated temperatures, characterised in that the objects are heated in a mixture comprising a boronising agent, an activator and optionally an inert substance, at temperatures of from 500°C up to the melting point of the corresponding platinum-boron or palladium-boron eutectic mixture, until a surface layer of from 20 to 500 µm has a boron content of from 0.3 to 1.5 wt.%.

4. Process for the hardening of objects according to claim 3, characterised in that the mixture contains 70 to 95 wt.% of amorphous boron and/or boron carbide as boronising agent and 5 to 30 wt.% of potassium borofluoride as activator.

## Revendications

1. Objets en platine et palladium, qui sont munis d'une couche superficielle dure et résistante à l'abrasion, qui contient du bore, le platine pouvant contenir jusqu'à 25 % en poids de métaux précieux et communs et le palladium jusqu'à 65 % en poids d'autres métaux précieux et jusqu'à 15 % en poids de métaux communs,
objets dans lesquels :
la couche superficielle durcie a une épaisseur de 20 à 500 µm, et une teneur en bore de 0,3 à 1,5 % en poids, qui est très largement enrobé dans le réseau métallique.

2. Objets selon la revendication 1, dans lesquels la couche superficielle durcie a une épaisseur entre 30 et 350 µm et contient de 0,5 à 0,9 % en poids de bore.

3. Procédé pour durcir des objets en platine et palladium selon les revendications 1 ou 2, par traitement avec des substances cédant du bore à des températures plus élevées,
caractérisé en ce que :
les objets sont chauffés dans un mélange d'un agent de boruration, d'un activateur et éventuellement d'une substance inerte à des températures de 500°C jusqu'au point de fusion de l'eutectique correspondant platine-bore ou palladium-bore, jusqu'à ce qu'une couche superficielle d'épaisseur 20 à 500 µm ait une teneur en bore de 0,3 à 1,5 % en poids.

4. Procédé pour durcir des objets selon la revendication 3, caractérisé en ce que le mélange contient 70 à 95 % en poids de bore amorphe et/ou de carbure de bore comme agent de boruration et de 5 à 30 % en poids de fluorure de bore et de potassium comme activateur.
